# EUROPÄISCHE PATENTSCHRIFT

(11) **EP 1 738 844 B1**
(45) Veröffentlichungstag und Bekanntmachung des Hinweises auf die Patenterteilung: **07.01.2009**
(21) Anmeldenummer: 06013200.8
(22) Anmeldetag: 27.06.2006
(51) Int. Cl.: B21H 3/02, B21H 3/06, F16B 25/10

(54) **Verfahren zum Herstellen einer Schraube mit einer Bohrspitze, Schraube und Walzbacken**
Method of manufacturing a screw having a drilling tip, screw and rolling die
Méthode de fabrication d'une vis comprenant une pointe de perçage, vis et matrice de laminage

(30) Priorität: 01.07.2005 DE 102005031534
(43) Veröffentlichungstag der Anmeldung: 03.01.2007
(73) Patentinhaber: Adolf Würth GmbH & Co. KG, 74653 Künzelsau (DE)
(72) Erfinder: Humm, Siegfried, 74214 Schöntal-Westernhausen (DE); Wunderlich, Andreas, 74635 Kupferzell (DE)
(74) Vertreter: Patentanwälte Ruff, Wilhelm, Beier, Dauster & Partner

(56) Entgegenhaltungen:
- EP-A1- 0 504 782
- DE-A1- 4 228 727
- DE-B3- 10 254 319
- US-A- 3 083 609

## Beschreibung

Die Erfindung betrifft ein Verfahren zum Herstellen einer Schraube mit einer Bohrspitze sowie einen Walzbacken zum Durchführen des Verfahrens.

Es ist bekannt, Schrauben mit Bohrspitzen zu versehen, um das Einschrauben in nicht vorgebohrte Materialien zu erleichtern. Zur weiteren Erleichterung ist es ebenfalls bekannt, dass die Schraube im Bereich der Schraubenspitze eine Schabenut aufweist, die beim Herstellen des von der Schraubenspitze begonnen Lochs unterstützend mitwirkt (EP 504 782).

Diese Schabenuten können beispielsweise nach dem Herstellen der Schraube in diese eingefräst werden. Es ist aber ebenfalls bekannt, die Schabenut in einem Arbeitsgang bei dem Walzen des Gewindes mit herzustellen, also ebenfalls einzuwalzen (DE 42 28 727). Dabei bleibt jedoch offen, zu welchem Zeitpunkt während des Walzens die Schabenut eingewalzt wird.

Weiterhin bekannt ist ein Verfahren zum Herstellen einer Schraube mit einer Bohrspitze, bei dem die Schabenut vor dem Abscheren des beim Walzen des Gewindes und der Bohrspitze verdrängten Materials eingewalzt wird, eine nach diesem Verfahren hergestellte Schraube und ein Walzbacken gemäß dem Oberbegriff des Anspruchs 10 (DE 10254319 B3).

Der Erfindung liegt die Aufgabe zu Grunde, ein Verfahren zum Herstellen einer eine Bohrspitze aufweisenden Schraube und einen Walzbacken hierfür zu schaffen.

Zur Lösung dieser Aufgabe schlägt die Erfindung ein Verfahren mit den Merkmalen des Anspruchs 1, eine Schraube mit den Merkmalen des Anspruchs 5 und einen Walzbacken mit den Merkmalen des Anspruchs 10 vor. Weiterbildungen der Erfindung sind Gegenstand von Unteransprüchen.

Durch die Erfindung ist es möglich, die Schabenut gegenüber den Gewindegängen und der Bohrspitze exakt zu positionieren. Durch das Abscheren des überflüssigen verdrängten Materials, das beim Walzen insbesondere der Bohrspitze hervorgerufen wird, kann die Schabenut und ihre Begrenzungen nicht mehr beschädigt oder verformt werden, da die Schabenut erst nach dem Abscheren des überschüssigen Butzens eingewalzt wird.

Die exakte Positionierung der Schabenut gegenüber der Bohrspitze ist insbesondere dann von Vorteil, wenn das Gewinde weit bis in die Bohrspitze hinein ragt, da hier ein schnelles Fassen der Schraube beim Einschrauben gewährleistet wird.

In Weiterbildung der Erfindung kann vorgesehen sein, dass die Schabenut parallel zur Achse der Schraube eingewalzt wird. Es ist aber auch möglich, dass die Schabenut einen gewissen kleinen Winkel gegenüber der Längsachse der Schraube aufweist.

In nochmaliger Weiterbildung der Erfindung kann vorgesehen sein, dass zwei Schabenuten diametral gewalzt werden, die dadurch auf voneinander abgewandten Seiten der Schraube angeordnet sind und sich gegenüberliegen.

Erfindungsgemäß kann bei dem Verfahren ein Doppelganggewinde gewalzt werden.

Die von der Erfindung vorgeschlagene Schraube zeichnet sich dadurch aus, dass die Schabenut nach dem Abscheren des beim Walzen des Gewindes und der Bohrspitze verdrängten Materials eingewalzt ist.

Die Erfindung schlägt ebenfalls einen Walzbacken zum Durchführen des von der Erfindung vorgeschlagenen Verfahrens vor, bei dem also die Ausbildung des Walzbackens, die die Schabenut in die Schraube einwalzt, in Arbeitsrichtung des Walzbackens hinter der Abscherstelle angeordnet ist. Es kann ein Vorsprung vorhanden sein oder auch mehrere Vorsprünge, die zum Einwalzen einer einzelnen oder auch zweier Schabenuten dienen können.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Figur 1: eine Draufsicht auf einen Walzbacken zur Durchführung des von der Erfindung vorgeschlagenen Verfahrens;
- Figur 2: in vergrößertem Maßstab eine Seitenansicht des vorderen Endes einer Schraube mit Bohrspitze;
- Figur 3: eine der Figur 2 entsprechende Darstellung von der gegenüberliegenden Seite der Schraube.

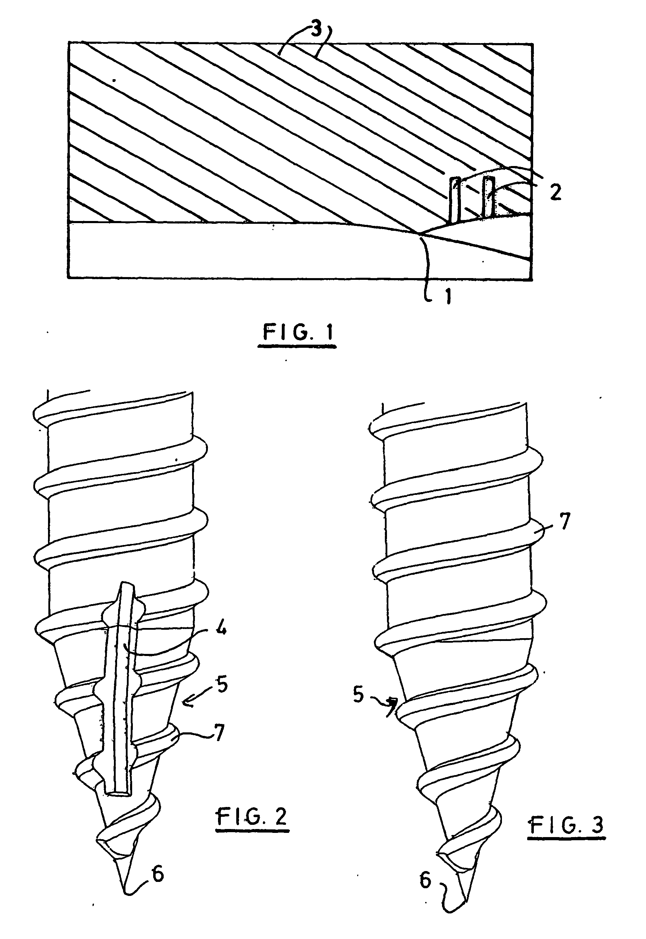

Figur 1 zeigt eine Draufsicht auf einen Walzbacken, wie er zur Herstellung einer Schraube und zur Durchführung des von der Erfindung vorgeschlagenen Verfahrens verwendet wird. Der Walzbacken weist das unter dem Steigungswinkel des Gewindes verlaufende Gewindegegenprofil auf. Von der in der Figur linken Seite her enthält der Walzbacken, wie bekannt, zunächst einen Einlaufbereich, in dem das Gewinde zunächst hergestellt wird. Daran schließt sich ein Übergangsbereich an, in dem das vorhandene Gewinde in die endgültige Form umgeformt wird. Am Ende des Übergangsbereichs ist das Gewinde des Schafts der Schraube vollständig hergestellt und in seine endgültige Form gebracht. Es schließt sich nun ein dritter Bereich an, in dem die Spitze der Schraube geformt und mit Gewinde versehen wird. Am Ende des Bereichs, in dem die Bohrspitze geformt wird, ist der Abscherpunkt 1 ausgebildet, an dem das verdrängte Material abgeschert wird.

In Arbeitsrichtung des Walzbackens, also in Figur 1 von links nach rechts, hinter der Abscherstelle 1 sind im dargestellten Ausführungsbeispiel zwei quer zur Arbeitsrichtung verlaufende höckerartige Vorsprünge 2 ausgebildet, die nach dem Abscheren des Butzens in die Schraube eine Schabenut einwalzen.

Wie man aus der Anordnung der die Schabenut herstellenden Vorsprünge 2 ohne weiteres erkennen kann, ist die Lage der Schabenut gegenüber den Gewindegängen, die durch die Linien 3 vereinfacht dargestellt sind, eindeutig festgelegt.

Das Ergebnis der Herstellung einer Schraube mit Hilfe des in Figur 1 dargestellten Walzbacken, zu denen natürlich ein gegenüberliegender Walzbacken gehört, ist in Figur 2 dargestellt. Hier ist die Schabenut 4, die eine etwa trapezförmige Querschnittsform aufweist, im Bereich der Bohrspitze 5 eingewalzt. Sie reicht nicht ganz bis zum spitzen Ende 6 der Bohrspitze, aber bis in den Bereich zwischen den ersten beiden Gewindegängen 7.

Figur 3 zeigt die Schraubenspitze von der gegenüberliegenden Seite, bei der also die Schabenut auf der Rückseite angeordnet und daher nicht sichtbar ist.

Mit Hilfe des von der Erfindung vorgeschlagenen Verfahrens lassen sich auch mehr als eine Schabenut herstellen, beispielsweise zwei auf einander gegenüberliegenden Seiten der Bohrspitze angebrachte Schabenuten.

## Patentansprüche

1. Verfahren zum Herstellen einer eine Bohrspitze (5) aufweisenden Schraube, bei dem in einem Arbeitsgang
1.1 auf einen Schraubenrohling ein Gewinde (7) aufgewalzt,
1.2 die Bohrspitze (5) geformt,
1.3 das dabei verdrängte Material als Butzen abgeschert und
1.4 nach dem Abscheren des Butzens mindestens eine Schabenut (4) eingewalzt wird.

2. Verfahren nach Anspruch 1, bei dem die Schabenut (4) parallel zur Achse der Schraube eingewalzt wird.

3. Verfahren nach Anspruch 1 oder 2, bei dem zwei Schabenuten (4) diametral gewalzt werden.

4. Verfahren nach einem der vorhergehenden Ansprüche, bei dem ein Doppelganggewinde gewalzt wird.

5. Schraube, mit
5.1 einem Schraubenschaft,
5.2 einer Bohrspitze (5),
5.3 einem sich über den Schaft und die Bohrspitze (5) erstreckenden gewalzten Gewinde (7), sowie mit
5.4 mindestens einer Schabenut (4), die
5.5 nach dem Abscheren des beim Walzen des Gewindes (7) und der Bohrspitze (5) verdrängten Materials eingewalzt ist.

6. Schraube nach Anspruch 5, bei der mindestens eine Schabenut (4) parallel zur Längsachse der Schraube verläuft.

7. Schraube nach Anspruch 5 oder 6, bei der mindestens eine Schabenut (4) schräg zur Längsachse der Schraube verläuft.

8. Schraube nach einem der Ansprüche 5 bis 7, mit zwei diametral angeordneten Schabenuten (4).

9. Schraube nach einem der Ansprüche 5 bis 8, bei der das Gewinde ein Doppelganggewinde ist.

10. Walzbacken für eine Schraube mit einer Bohrspitze (5), mit
10.1 einem Bereich zum Walzen eines Gewindes (7) auf den Schraubenschaft,
10.2 einem Bereich zum Formen einer Schraubenspitze (5),
10.3 einer Abscherstelle (1) zum Abscheren des bei dem Walzen des Gewindes (7) und bei der Formung der Bohrspitze (5) verdrängten Materials, sowie mit
10.4 mindestens einem Vorsprung (2) zum Einwalzen einer Schabenut (4),
**dadurch gekennzeichnet, dass**
10.5 der Vorsprung (2) zum Einwalzen der Schabenut (4) in Arbeitsrichtung des Walzbackens hinter der Abscherstelle (1) angeordnet ist.

11. Walzbacken nach Anspruch 10, bei dem der Vorsprung (2) parallel zur Längsachse der Schraube angeordnet ist.

## Claims

1. A method for manufacturing a screw having a drilling tip (5), wherein, in a single operation,
1.1 a thread (7) is rolled on a screw blank,
1.2 the drilling tip (5) is formed,
1.3 the material displaced thereby is sheared off in the form of clumps, and
1.4 at least one scraper groove (4) is rolled onto it after the clumps have been sheared off.

2. A method according to claim 1, wherein the scraper groove (4) is rolled parallel to the screw's axis.

3. A method according to claim 1 or claim 2, wherein two diametrically opposed scraper grooves (4) are rolled.

4. A method according to any of the foregoing claims, wherein a dual-pitch thread is rolled.

5. A screw having
5.1 a shank,
5.2 a drilling tip (5),
5.3 a rolled thread (7) extending over the full lengths of its shank and drilling tip (5), and
5.4 at least one scraper groove (4) that is
5.5 rolled after the material displaced during rolling of the thread (7) and formation of the drilling tip (5) has been sheared off.

6. A screw according to claim 5, wherein the at least one scraper groove (4) is parallel to the screw's longitudinal axis.

7. A screw according to claim 5 or claim 6, wherein the at least one scraper groove (4) is inclined relative to the screw's longitudinal axis.

8. A screw according to any of claims 5 - 7 having two diametrically opposed scraper grooves (4).

9. A screw according to any of claims 5 - 8, wherein the thread is a dual-pitch thread.

10. Rolling dies for a screw having a drilling tip (5), having
10.1 a section for rolling a thread (7) on the screw's shaft,
10.2 a section for forming a screw tip (5),
10.3 a shearing location (1) for shearing off material displaced during rolling of the thread (7) and formation of the drilling tip (5), and
10.4 at least one protrusion (2) for rolling a scraper groove (4) thereon,
wherein
10.5 the protrusion (2) for rolling the scraper groove (4) is arranged following the shearing location (1), reckoned along the rolling die's direction of advance.

11. Rolling dies according to claim 10, wherein the protrusion (2) is arranged parallel to the screw's longitudinal axis.

## Revendications

1. Procédé de fabrication d'une vis présentant une pointe de perçage (5), dans lequel, en une étape de travail,
1.1 un filetage (7) est laminé sur une pièce brute de vis,
1.2 la pointe de perçage (5) est formée,
1.3 la matière déplacée en même temps est cisaillée en tant que pépite et
1.4 au moins une rainure à racler (4) est laminée après le cisaillement de la pépite.

2. Procédé selon la revendication 1, dans lequel la rainure à racler (4) est laminée parallèlement à l'axe de la vis.

3. Procédé selon la revendication 1 ou 2, dans lequel deux rainures à racler (4) sont laminées de manière diamétrale.

4. Procédé selon l'une quelconque des revendications précédentes, dans lequel un filetage à double filet est laminé.

5. Vis comprenant
5.1 une tige de vis,
5.2 une pointe de perçage (5),
5.3 un filetage (7) laminé s'étendant sur la tige et la pointe de perçage (5), ainsi qu'
5.4 au moins une rainure à racler (4) qui
5.5 est laminée après le cisaillement de la matière déplacée lors du laminage du filetage (7) et de la pointe de perçage (5).

6. Vis selon la revendication 5, dans laquelle au moins une rainure à racler (4) s'étend parallèlement à l'axe longitudinal de la vis.

7. Vis selon la revendication 5 ou 6, dans laquelle au moins une rainure à racler (4) s'étend de manière inclinée par rapport à l'axe longitudinal de la vis.

8. Vis selon l'une quelconque des revendications 5 à 7, comprenant deux rainures à racler (4) disposées de manière diamétrale.

9. Vis selon l'une quelconque des revendications 5 à 8, dans laquelle le filetage est un filetage à double filet.

10. Mâchoire de laminage pour une vis comprenant une pointe de perçage (5), comprenant
10.1 une partie destinée à laminer un filetage (7) sur la tige de vis,
10.2 une partie destinée à former une pointe de perçage (5),
10.3 un point de cisaillement (1) destiné à cisailler la matière déplacée lors du laminage du filetage (7) et lors de la formation de la pointe de perçage (5), ainsi qu'
10.4 au moins une saillie (2) destinée à laminer une rainure à racler (4),
**caractérisée en ce que**
10.5 la saillie (2) destinée à laminer la rainure à racler (4) est disposée derrière le point de cisaillement, dans le sens de travail de la mâchoire de laminage.

11. Mâchoire de laminage selon la revendication 10, dans laquelle la saillie (2) est disposée parallèlement à l'axe longitudinal de la vis.
